# EUROPÄISCHE PATENTSCHRIFT

(11) **EP 0 940 355 B1**
(45) Veröffentlichungstag und Bekanntmachung des Hinweises auf die Patenterteilung: **07.05.2003**
(21) Anmeldenummer: 98113856.3
(22) Anmeldetag: 24.07.1998
(51) Int. Cl.: B65G 1/14

(54) **Stapelsäule zur Aufnahme einer Vielzahl von flächigen Werkstücken**
Stacking column for the storage of a plurality of flat work pieces
Colonne de stockage pour une pluralité de pièces à usiner plates

(30) Priorität: 06.03.1998 DE 29803921 U
(43) Veröffentlichungstag der Anmeldung: 08.09.1999
(73) Patentinhaber: Schambach, Peter, 13403 Berlin (DE)
(72) Erfinder: Schambach, Peter, 13403 Berlin (DE)
(74) Vertreter: Scholz, Hartmut, Dipl.-Ing. Patentanwalt

(56) Entgegenhaltungen:
- EP-A- 0 339 214
- EP-A- 0 890 531
- DE-A- 3 807 663
- DE-A- 3 811 310

## Beschreibung

Die Erfindung betrifft eine Stapelsäule zur Aufnahme einer Vielzahl von flächigen Werkstücken, mit einer Vielzahl von Klinken, die in Klinkenlagern beweglich in einem Rahmen angeordnet sind und die jeweils einen Werkstückanschlag aufweisen, mit einzeln auslösbaren Verriegelungsbolzen, die die Klinken einzeln in ihrer das Werkstück haltenden Position arretieren, und mit Aufrichtmitteln zum Aufrichten einer zur Aufnahme eines Weikstücks benötigten nächsten Klinke, wobei jeder Klinke ein Verriegelungsbolzen zugeordnet ist und die Verriegelungsbolzen unabhängig voneinander auf einer Bolzenwelle beweglich gelagert sind.

Im Zuge einer Just-In-Time-Produktion und der Auslagerung der Produktion muß ein Großteil der Halbfertigprodukte und Zulieferteile termingerecht vom Hersteller zum Montagebetrieb transportiert werden. Um die Transportkosten zu senken, bedarf es einer raumsparenden Verpackung und effizienten Anordnung der Zulieferteile auf einem Transportmedium. Dies steht jedoch oftmals im Widerspruch zu einem sicheren und beschädigungsfreien Transport.

Insbesondere in der Automobilindustrie besteht die Notwendigkeit, eine größere Menge von gleichartigen flächigen Blech- oder Glasteilen zu transportieren. Dies erfolgt in der Regel in sogenannten Stapelsäulen, die wiederum in Transportcontainern angeordnet sind. Die Stapelsäulen sollen die flächigen Zulieferteile untereinander auf einer eine gegenseitige Beschädigung ausschließenden, möglichst gleichmäßigen Distanz halten, wie sie beispielsweise aus der EP 0 339 214 A2, die eine Stapelsäule gemäss dem Oberbegriff des Anspruchs 1 offenbart, bekannt ist. Nachteilig bei diesen bekannten Transportcontainern ist jedoch, daß die Werkstücke nicht einzeln verriegelt werden können, sondern immer nur in ihrer Gesamtheit. Ferner sind bekannte Stapelsäulen aufgrund ihrer Verriegelungsvorrichtung nur bedingt für den Einsatz von Robotern geeignet.

Aufgabe der vorliegenden Erfindung ist es, eine Vorrichtung zu schaffen, die zur Aufnahme einer Vielzahl von flächigen Werkstücken, mit einer Vielzahl von Klinken geeignet ist.

Gelöst wird diese Aufgabe dadurch, daß die Bolzenwelle Entriegelungsnocken aufweist und alle Verriegelungsbolzen durch die Entriegelungsnocken aus ihrer Verriegelungsposition bewegbar sind.

Dazu sind Aufrichtmittel in Form einer Steuerkurve und eines Hammerkopfs an den Klinken vorgesehen, bei denen die vorhergehende Klinke durch ihre Aufrichtbewegung die nachfolgende Klinke in die Habacht-Position bewegt. In einer weiteren Ausführungsform sind die Steuerkurven hintereinander angeordnet. Beim Beladen wird das Werkstück über die obere Kante des Rahmens geschoben, wobei die Klinke durch den Kontakt des Werkstükkes mit dem Werkstückanschlag aus der Habacht-Position in die aufgerichtete Position bewegt wird.

Nachdem die Klinke in die aufgerichtete Position bewegt wurde, fallen die Verriegelungsbolzen in die Verriegelungsposition vor die Klinken, so daß eine Bewegung der Klinken zurück in die liegende bzw. Habacht-Position ausgeschlossen ist. Die höchste Funktionalität der erfindungsgemäße Vorrichtung ist bei einer waagerechten Ausrichtung gegeben. Jedoch ist eine seitliche Anstellung im Drehwinkel von 90° bis 45° möglich. Durch Veränderung der Steuerkurve zu einer Hubkurve ist die Funktionalität im Bereich von 0° bis 45° gegeben. Der Verriegelungsmechanismus bleibt bei dieser Ausführung identisch.

Die beweglichen Teile wie Auflage, Steuerkurve, Klinkenbolzen, Bolzen und Entriegelungsnockenwelle, sind vorzugsweise aus Nirosta-Edelstahl hergestellt.

Weitere vorteilhafte Maßnahmen sind in den Unteransprüchen beschrieben. Die Erfindung ist in der beiliegenden Zeichnung dargestellt und wird nachfolgend näher beschrieben;
- Figur 1: zeigt einen Ausschnitt der Seitenansicht einer Stapelsäule, mit einem Rahmen, der von einer Rahmenabschlußplatte begrenzt ist, mit einer Vielzahl von Klinken, die innerhalb des Rahmens angeordnet sind und von denen eine in Habacht-Position gehalten wird, mit Verriegelungsbolzen, die auf einer Bolzenwelle gelagert sind, und mit Entriegelungsnocken, die auf der Bolzenwelle angeordnet sind, um die Verriegelung aufzuheben;
- Figur 2: zeigt einen Ausschnitt der Seitenansicht einer Stapelsäule nach Figur 1, wobei sich eine Klinke in aufgerichteter Position befindet und ein Werkstück stützt, wodurch eine weitere Klinke in HabachtPosition bewegt worden ist;
- Figuren 3a, 3b, 3c und 3d: zeigen unterschiedliche Ansichten der Klinke, mit einer Steuerkurve, mit einem Hammerkopf, mit einem Werkstückanschlag und mit einem Klinkenlager;
- Figur 4: zeigt die Vorderansicht einer Stapelsäule nach Figur 1, mit einer Rahmenabschlußplatte, mit einer Klinke in HabachtPosition, deren Verriegelungsbolzen sich nicht in der Verriegelungsposition befindet;
- Figur 5: zeigt die Vorderansicht der Stapelsäule nach Figur 4, mit einem Entriegelungshebel, der auf die Bolzenwelle wirkt;
- Figur 6: zeigt einen Ausschnitt der Draufsicht auf eine Stapelsäule nach Figur 1, ohne zweite Rahmenabschlußplatte.

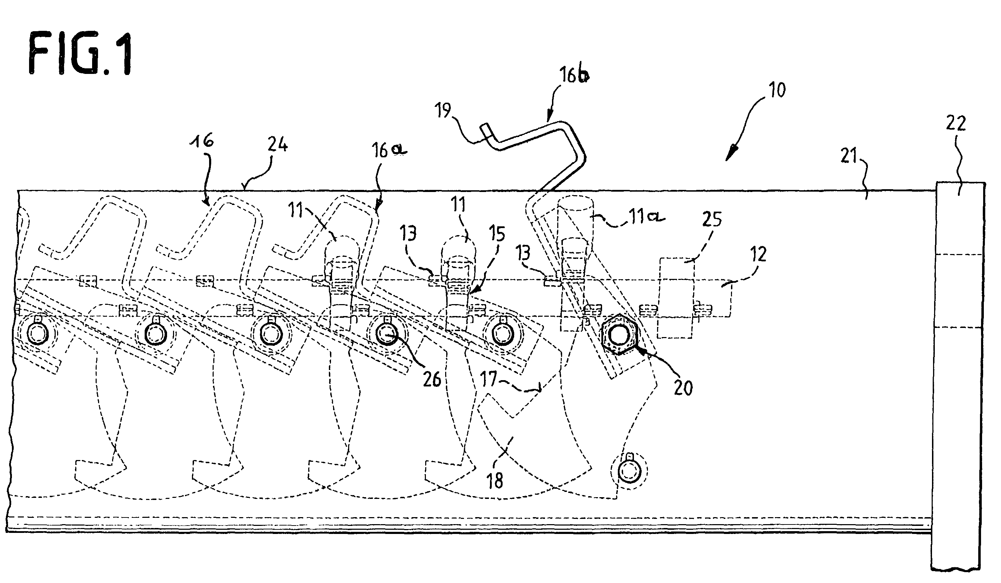

Die in der Figur 1 dargestellte Stapelsäule 10 besteht im wesentlichen aus einem vorzugsweise U-förmig ausgebildeten Träger als Rahmen 21, der durch Rahmenabschlußplatten 22 begrenzt ist. Innerhalb des Rahmens 21 sind eine Vielzahl von Klinken 16, 16a und 16b auf Klinkenlagern 20 drehbar angeordnet. Die Klinken 16, 16a und 16b weisen Werkstückanschläge 19 auf, an denen beispielsweise tiefgezogene, gepreßte, gestanzte oder in sonstiger Weise vorgefertigte, flächige Werkstücke 23 anliegen.

Die flächigen Werkstücke 23 werden zum Transport ausgerichtet und durch die Werkstückanschläge 19 fixiert. Bei waagerechter Ausrichtung der Stapelsäule 10 kippen die Klinken 16, 16a und 16b aufgrund ihrer Gewichtsverteilung nach vorne. Hierdurch befindet sich die Oberkante der Klinken 16 unterhalb der Auflagekante 24 des Rahmens 21.

In einer weiteren Ausführungsform werden die Klinken 16, 16a und 16b durch - nicht dargestellte - Federn in die liegende Position bewegt. Hierdurch ist es möglich, die Stapelsäule auch in der vertikalen Anordnung zu nutzen.

Jede Klinke 16, 16a und 16b weist eine Steuerkurve 17 und einen Hammerkopf 18 auf, mit denen die Ausrichtung der benachbarten Klinke beeinflußt wird. Der Hammerkopf 18 drückt die Klinke 16a in Habacht-Position, sobald die vorhergehende Klinke 16b durch ein Werkstück 23 in die aufgerichtete Position geschoben worden ist. Dabei wird in Folge der Aufrichtbewegung der Klinke 16b der Hammerkopf 18 um das Klinkenlager 20 der nachfolgenden Klinke 16a geführt, um die Klinke 16a durch einen Druck auf den unteren Werkstückanschlag 19 anzuheben.

Der Drehwinkel der ersten Klinke 16b wird durch einen Klinkenanschlag 27 begrenzt, so daß sich diese zu Beginn auch ohne Werkstück 23 in Habacht-Position befindet.

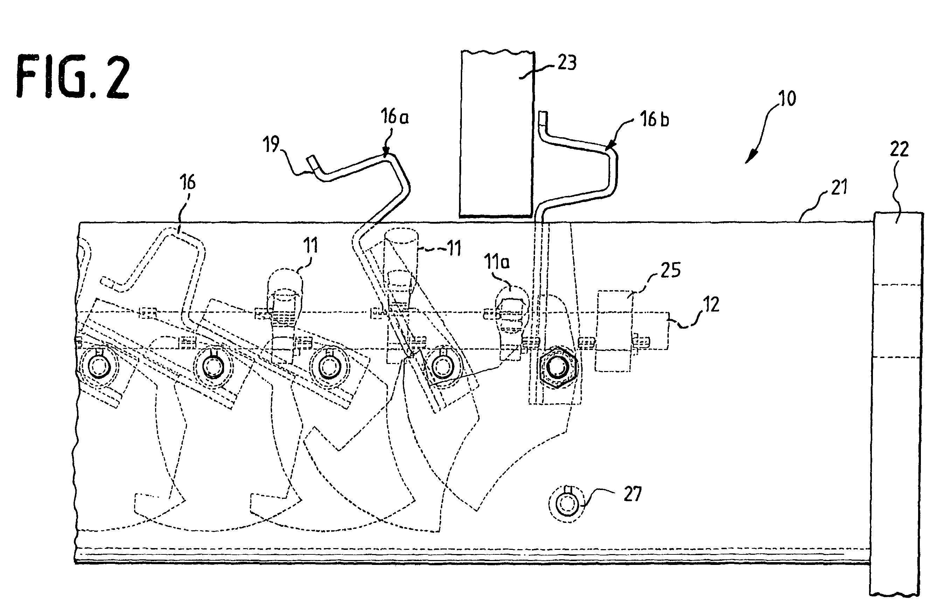

Figur 2 zeigt eine Klinke 16a in Habacht-Position. Die Klinke 16b ist durch das Werkstück 23 aufgerichtet worden, das vorzugsweise durch einen Roboter über die Auflagekante 24 des Rahmens 21 in Richtung der Klinke 16b geschoben sein kann. Durch den Kontakt des Werkstücks 23 mit dem Werkstückanschlag 19, wird die Klinke 16b in die aufgerichtete Position gedreht. Bei dieser Bewegung wird der Verriegelungsbolzen 11a erst angehoben, um dann aufgrund seiner Gewichtsverteilung entlang des Werkstückanschlagrückens 19 vor die Klinke 16b zu fallen. Der Verriegelungsbolzen 11a verhindert somit, daß die Klinke 16b in die Habacht-Position bzw. in die liegende Position zurückfällt.

Bei einer anderen - nicht dargestellten - Ausführungsform wird der Verriegelungsbolzen 11a durch eine Feder in die Verrieglungsposition vor die Klinke 16b gedrückt. Hierdurch wird die identische Funktionalität gewährt, ohne von der waagerechten Lage der Stapelsäule 10 abhängig zu sein.

Die Verriegelungsbolzen 11 und 11a sind auf einer Bolzenwelle 12 gelagert, die sich über die ganze Länge des Rahmens 21 erstreckt. Auf der Bolzenwelle 12 sind im Lagerungsbereich der Klinken 16, 16a und 16b Entriegelungsnocken 13 angeordnet, die die verriegelten Klinken 16b durch Drehung der Bolzenwelle 12 anheben. Die Fixierung der Klinke 16b wird damit aufgehoben. Die Bolzenwelle 12 ist in Bolzenwellenlagern 25 gelagert, die mit dem Rahmen 21 verbunden sind.

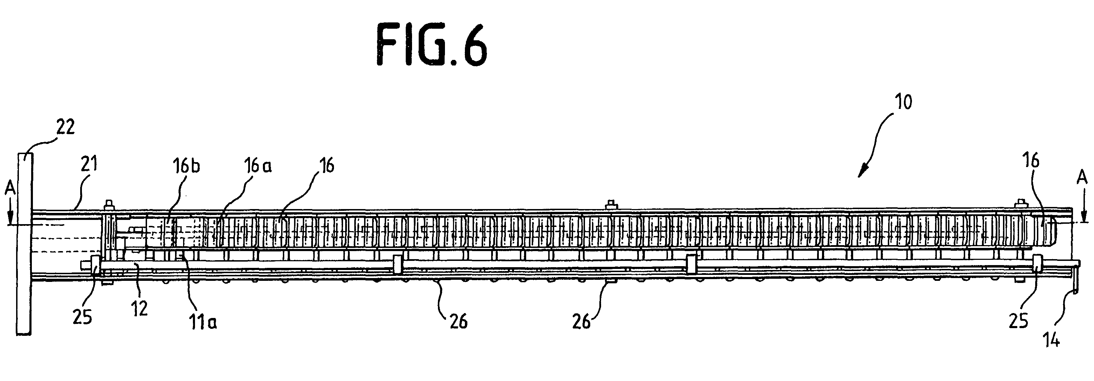

Wie die Figur 5 zeigt, weist die Bolzenwelle 12 an mindestens einem ihrer Enden einen Entriegelungshebel 14 auf. Durch Drehen des Entriegelungshebel 14 können die Verriegelungsbolzen 11a angehoben werden.

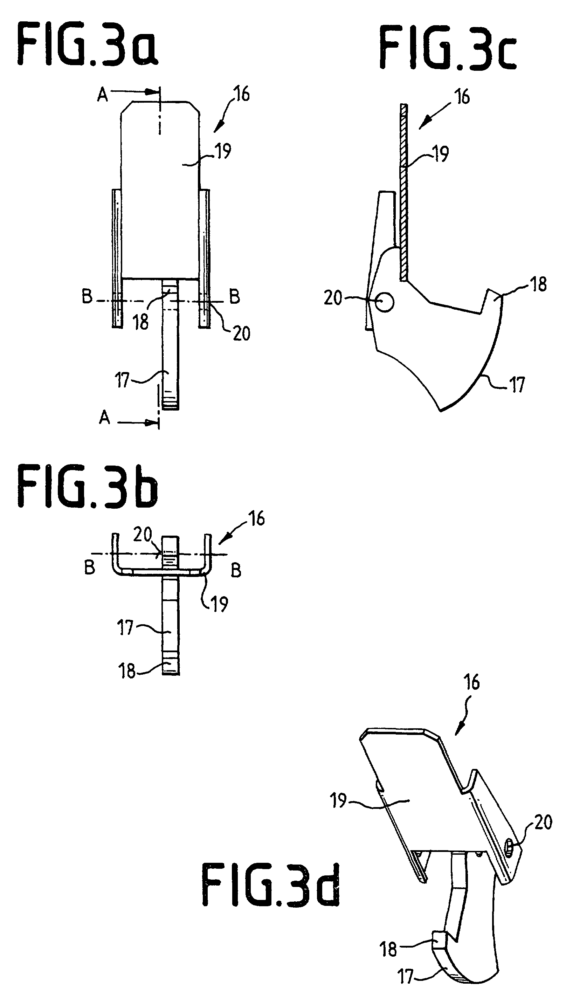

Die Figuren 3a, 3b 3c und 3d zeigen eine mögliche Ausgestaltungsform der Klinken 16. Der Hammerkopf 18 mit der entsprechenden Steuerkurve 17 ist L-förmig mit dem Werkstückanschlag 19 verbunden. Dabei verläuft das Klinkenlager 20 durch den Schnittpunkt der beiden L-Schenkel.

Durch die massive Ausführung des Hammerkopfs 18 neigt sich der Werstückanschlag 19 bei einer drehbaren Lagerung nach unten. Wie die Figuren 3a und 3b zeigen, wird der Hammerkopf 18 vorzugsweise versetzt mit dem Werkstückanschlag 19 verbunden. Dabei sind die Hammerköpfe 18 abwechselnd rechts von der Linie A-A und links von der Linie B-B angeordnet, damit die einander anhebenden Klinken 16b und 16a nicht kollidieren.

In einer weiteren - nicht dargestellten - Ausführungsform sind die Steuerkurven hintereinander mit einer anderen Formgestaltung angeordnet.

In Abhängigkeit von der Ausführungsform des Werkstücks 23 sind die Werkstückanschläge 19 unterschiedlich ausgeformt. Bei hohen flächigen Werkstücken 23 sind die Werkstückanschläge 19 ebenfalls höher ausgebildet.

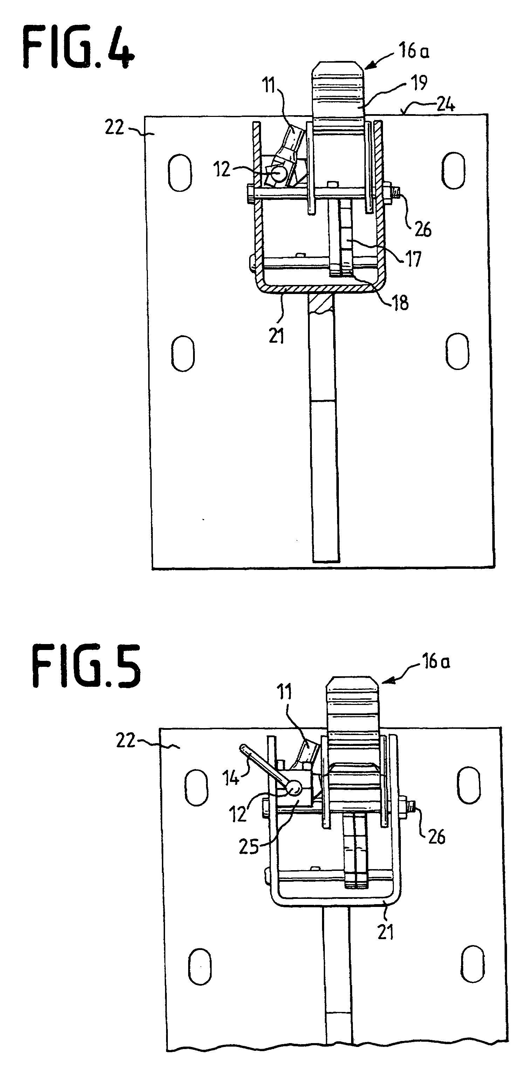

Die Figuren 4 und 5 zeigen die versetzte Anordnung des Hammerkopfs 18 und der Steuerkurve 17. Ferner ist die U-förmige Ausgestaltung des Rahmens 21 erkennbar, der auf einer Seite durch eine Rahmenabschlußplatte 22 begrenzt ist. Die Rahmenabschlußplatte 22 dient vorzugsweise zur Befestigung der Stapelsäule 10 innerhalb eines - nicht darstellten - Transportcontainers.

Figur 5 zeigt den Entriegelungshebel 14, der einstückig mit der Bolzenwelle 12 verbunden ist. Infolge des Umlegens des Entriegelungshebels 14 werden die Verriegelungsbolzen 11a in die aufrechte Position bewegt. Danach befinden sich die Verriegelungsbolzen sofort wieder in Habacht-Position zur Verriegelung der Klinken 16a, 16b und 16. Die Klinken 16b sind hierdurch freigegeben und fallen in die liegende Position.

Figur 6 zeigt eine Draufsicht auf die Stapelsäule 10. Es ist zu erkennen, daß die Bolzenwellenlager 25 an beiden Enden innerhalb des Rahmens 21 angeordnet sind. Weiterhin ist jeder Klinke 16 eine Klinkenwelle 26 zugeordnet, die sich innerhalb des Rahmens im rechten Winkel zum Schnitt A-A von einer Seite des Rahmens 21 zu anderen erstrecken. Auf diesen Klinkenwellen 26 sind die Klinken 16 durch die Klinkenlager 20 beweglich angeordnet.

### Bezugszeichen

- 10: Stapelsäule
- 11: Verriegelungsbolzen
- 11a: Verriegelungsbolzen in Verriegelungsposition
- 12: Bolzenwelle
- 13: Entriegelungsnocke
- 14: Entriegelungshebel
- 15: Wellenlager
- 16: Klinke in liegender Position
- 16a: Klinke in Habacht-Position
- 16b: Klinke in aufgerichteter Position
- 17: Steuerkurve
- 18: Hammerkopf
- 19: Werkstückanschlag
- 20: Klinkenlager
- 21: Rahmen
- 22: Rahmenabschlußplatte
- 23: Werkstück
- 24: Auflagekante
- 25: Bolzenwellenlager
- 26: Klinkenwelle
- 27: Klinkenanschlag

## Patentansprüche

1. Stapelsäule zur Aufnahme einer Vielzahl von flächigen Werkstücken, mit einer Vielzahl von Klinken (16, 16a, 16b), die in Klinkenlagern (20) beweglich in einem Rahmen (21) angeordnet sind und die jeweils einen Werkstückanschlag (19) aufweisen, mit einzeln auslösbaren Verriegelungsbolzen (11, 11a), die die Klinken (16) einzeln in ihrer das Werkstück (23) haltenden Position arretieren, und mit Aufrichtmitteln (17, 18) zum Aufrichten einer zur Aufnahme eines Werkstücks (23) benötigten nächsten Klinke (16a), wobei jeder Klinke ein Verriegelungsbolzen zugeordnet ist und die Verriegelungsbolzen unabhängig voneinander auf einer Bolzenwelle beweglich gelagert sind, **dadurch gekennzeichnet, daß** die Bolzenwelle (12) Entriegelungsnocken (13) aufweist und alle Verriegelungsbolzen (11, 11a) durch die Entriegelungsnocken (13) aus ihrer Verriegelungsposition bewegbar sind.

2. Stapelsäule nach Anspruch 1, **dadurch gekennzeichnet, daß** die Bolzenwelle (12) mit einem Entriegelungshebel (14) versehen ist.

3. Stapelsäule nach Anspruch 1 und 2, **dadurch gekennzeichnet, daß** die Verriegelungsbolzen (11a) in Verriegelungsposition vor den Klinken (16b) aufliegen.

4. Stapelsäule nach den Ansprüchen 1 bis 3, **dadurch gekennzeichnet, daß** die Verriegelungsbolzen (11, 11a) durch ihre Schwerkraft oder durch Federkraft in Verriegelungsposition, vorzugsweise in eine liegende Position bewegbar sind.

## Claims

1. Stacking column for receiving a plurality of substantially planar workpieces, comprising a plurality of pawl elements (16, 16a, 16b) movably mounted in pawl bearings (20) on a frame (21) and each including workpiece abutment means (19), individually releasable latching bolts (11, 11a) adapted to secure pawls (16) individually in their workpiece (23) retaining positions, and erecting means (17, 18) for erecting a succeeding pawl (16a) needed for receiving a workpiece (23), each said pawls having associated therewith a latching bolt and said latching bolts being mounted for independent movement on a bolt shaft, **characterized by** each bolt shaft (12) including unlatching cam means (13) and by all latching bolts (11, 11a) being movable from their latching position by said unlatching cam means (13).

2. Stacking column as in claim 1, **characterized in that** bolt shaft (12) is provided with an unlatching lever (14).

3. Stacking column as in claim 1 and 2, **characterized by** latching bolts (11a) lying in front of pawls (16b) in the latching position.

4. Stacking column as in claims 1 to 3, **characterized by** latching bolts (11, 11a) being movable by gravity or spring force into their latching position, preferably into a lying position.

## Revendications

1. Colonne d'empilement destinée à recevoir une multitude de pièces à usiner plates, comprenant une multitude de loquets (16, 16a, 16b) qui sont montés de façon mobile dans des paliers de loquet (20) situés dans un cadre (21) et qui présentent chacun une butée (19) de pièce à usiner, comprenant également des verrous (11, 11a) pouvant être déclenchés individuellement, qui immobilisent individuellement les loquets (16) dans la position dans laquelle ils maintiennent la pièce à usiner (23), ainsi que des moyens de redressement (17, 18) pour redresser un loquet suivant (16a) nécessaire pour prendre en charge une pièce à usiner (23), sachant qu'à chaque loquet est associé un verrou et que les verrous sont montés de façon mobile, indépendamment les uns des autres, sur un arbre, **caractérisée en ce que** chaque arbre de verrou (12) présente des cames de déverrouillage (13) et **en ce que** tous les verrous (11, 11a) peuvent être mis dans la position déverrouillée par les cames de déverrouillage (13).

2. Colonne d'empilement selon la revendication 1, **caractérisée en ce que** l'arbre de verrou (12) est muni d'un levier de déverrouillage (14).

3. Colonne d'empilement selon les revendications 1 et 2, **caractérisée en ce que** les verrous (11a) en position de verrouillage reposent à l'avant des loquets (16b).

4. Colonne d'empilement selon les revendications 1 à 3, **caractérisée en ce que** les verrous (11, 11a) peuvent être mis en position de verrouillage, de préférence dans une position allongée, par la gravité ou par la force d'un ressort.
